# EUROPEAN PATENT APPLICATION

(11) **EP 1 209 907 A1**
(43) Date of publication of application: **29.05.2002**
(21) Application number: 00310505.3
(22) Date of filing: 27.11.2000
(51) Int. Cl.: H04N 5/445

(54) **Display device**

(71) Applicant: Sony Service Centre (Europe) N.V., 1840 Londerzeel (BE)
(72) Inventor: Copejans, Gert, 1130 Brussels (BE)
(74) Representative: Ayers, Martyn Lewis Stanley

(57) **Abstract**

A display device, such as an MHP compliant television device, and a method of producing, in such a device, a background image which slowly changes from a start image to an end image, wherein corresponding blocks of the start image and the end image are processed with an interpolation function so as to produce respective intermediate blocks and, between frame outputs from the video output memory of the television device, some of the data in the video output memory is replaced with corresponding data from the intermediate blocks.

## Description

The present invention relates to a display device and, in particular, to a device and a method for producing a slowly changing background image.

Digital television allows the display of many different applications other than merely traditional television channels. In particular, it is now known to broadcast various mixtures of text and graphics for display on a television screen, for instance for merely informative purposes or, alternatively, as part of some interactive scheme. To present the text and images in a more attractive manner, background images are also provided for display on the screen. Hence, the background image is used to fill the screen such that text, graphics and images may be displayed over that background.

The present invention is based on a recognition that the use of a fixed unchanging background seems relatively unsophiscated to the user.

An object of the present invention is to provide a background image which gradually changes. However, the memory and processing power available in conventional set top boxes and integrated televisions is insufficient to provide a background image made up of a full moving video sequence.

According to the present invention, it is proposed to provide a slowly changing background image by successively interpolating a plurality of intermediate images from a start image and an end image.

However, typical television devices have insufficient processing power to interpolate an intermediate frame to replace the frame currently being displayed. Indeed, in order to replace the content of the video output memory supplying the background image to the display, it would be necessary to provide a double output buffer whereby one buffer was being rewritten while the other was being output to the display.

It is also noted that conventional television devices have insufficient memory to store two full images, ie the start and end images, since typically these might require 1.5 megabytes each. Thus, the use of a double output buffer certainly goes beyond the memory availability in a typical set top box or integrated television device.

It is thus an object of the present invention to provide a slowly changing background image despite the limited of processing available in typical television devices.

According to the present invention, there is provided a method of producing, in a display device, a background image which slowly changes from a start image to an end image, the method including:
processing corresponding blocks of the start image and the end image with an interpolation function so as to produce respective intermediate blocks:
   between frame outputs from a video output memory of the device, replacing some of the data in the video output memory with corresponding data from the intermediate blocks.

According to the present invention, there is also provided a display device arranged to produce a background image which slowly changes from a start image to an end image, the device including:
a video output memory for outputting successive frames for display;
a processor for processing corresponding blocks of the start image and the end image with an interpolation function so as to produce respective intermediate blocks;
a controller for replacing, between frame outputs from the video memory, some of the data in the video output memory with corresponding data from the intermediate blocks.

In this way, the amount of processing required in the time between successive frame outputs is reduced. In particular, in that time, only some of the data in the video output memory needs to be replaced and, hence, similarly, only that data needs to be recalculated by the interpolation function.

Thus, between each successive frame, only one block of image data need be replaced on the display. Alternatively, a plurality of blocks may be replaced. However, in any event, it is preferred that the changes occurring between one block and its preceding block are so small as to be unnoticeable to the user but such that, over some time, for instance 15 minutes, the entire display will have changed from the start image to the end image.

Preferably, the device includes a memory in which the start image is stored in a compressed form according to a predetermined compression scheme.

Similarly, the end image may be stored in a compressed form according to a predetermined compression scheme.

In this way, the slowly changing image may be provided over an extended period of time, for instance 15 minutes, from only a relatively small amount of data for the start and end images.

Alternatively, a demultiplexer can be used to provide, from a transport stream, blocks of the end images. These blocks may themselves also be in compressed form.

In this way, the device need only store the start image in memory and then calculate new intermediate blocks for the video output memory on the basis of interpolation between the blocks received from the transport stream and their corresponding blocks in the start image.

Preferably, the compression scheme compresses the images on a block by block basis corresponding to the blocks to be processed by the processor.

In this way, the intermediate blocks used to replace blocks of data in the video output memory correspond directly with the stored compressed blocks. Thus, the processor can retrieve, decompress and interpolate blocks individually and it is not necessary to decompress the entire start and end images before interpolating individual blocks.

Preferably, an indexer is provided for recording an index of the stored compressed blocks such that the processor can retrieve blocks of specific positions according to the index.

The index allows the processor to identify uniquely all of the blocks of the start and end images such that an intermediate block can be produced to replace the data in the video output memory at any position on the display as required.

Preferably, the processor processes corresponding blocks as a function of time relative to the total time required to change from the start image and to the end image as a function of the position of the corresponding blocks within the image.

Thus, the interpolation function changes over time such that the data contained in the intermediate blocks gradually becomes more weighted towards the end image than the start image. However, since the process is conducted as a function of the position of the blocks also, blocks at certain positions on the display may be caused to change more quickly or more slowly.

As mentioned above, the processor may process only one block between successive frame outputs. However, alternatively, the processor may process a plurality of corresponding blocks together to form a plurality of intermediate blocks and the controller may then replace the data in the video image memory with the corresponding data of the plurality of intermediate blocks between two successive frame outputs.

Thus, a number of blocks across the display screen, less than the total number of blocks for a frame, may be changed together. However, since the processing is conducted also as a function of position, the degree of interpolation conducted may vary between the blocks.

As will be appreciated, the invention is particularly advantageous for use with analogue and digital television devices such as those provided with small processing and memories and capable of running downloaded applications. Such television devices include interactive television devices, for instance MHP compliant devices, such as integrated television devices or set top boxes.

It is also applicable to other environments in which limited processing and memory is available. For instance, some internet access devices, such as mobile telephones, may have limited processing and memory and would benefit from the invention. Indeed, PC platforms would still benefit from the present invention, since less processing and memory are required. As another example, displays for providing information, for instance in cars or other machinery, might use the invention to provide a gradually changing background. Indeed, the display screen of a mobile telephone could have a gradually changing background in this way.

The invention will be more clearly understood from the following description, given by way of example only, with reference to the accompanying drawings, in which:
Figure 1 illustrates the layered structure of an MHP platform;
Figure 2 illustrates a television display screen;
Figures 3(a) and (b) illustrate respectively a set top box with a television and an integrated television; and
Figure 4 illustrates schematically an arrangement for producing a gradually changing background image.

The present invention will be described with particular reference to television devices, in particular MHP compliant devices. However, it will be appreciated that it can also be embodied in other suitable devices as mentioned above.

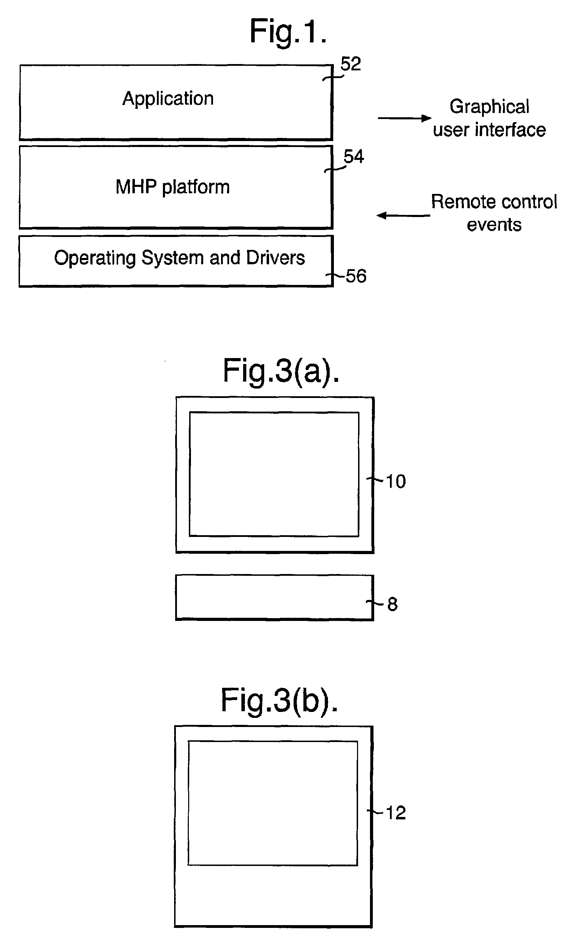

As illustrated by Figure 1, MHP set-top boxes and integrated television devices are constructed such that various applications 52 may be run on the MHP platform layer 54, itself above the operating system and drivers layer 56. In this way, applications may run on a variety of different television devices having different operating systems and drivers, but all running on the MHP platform. In particular, the MHP platform allows the use of JAVA applications. Examples of different platforms include Canal +, Mediahighway and Open TV.

In this context, the invention can be implemented by means of a special API which will allow an application to make use of the process and which runs on native code to ensure low load on the processor.

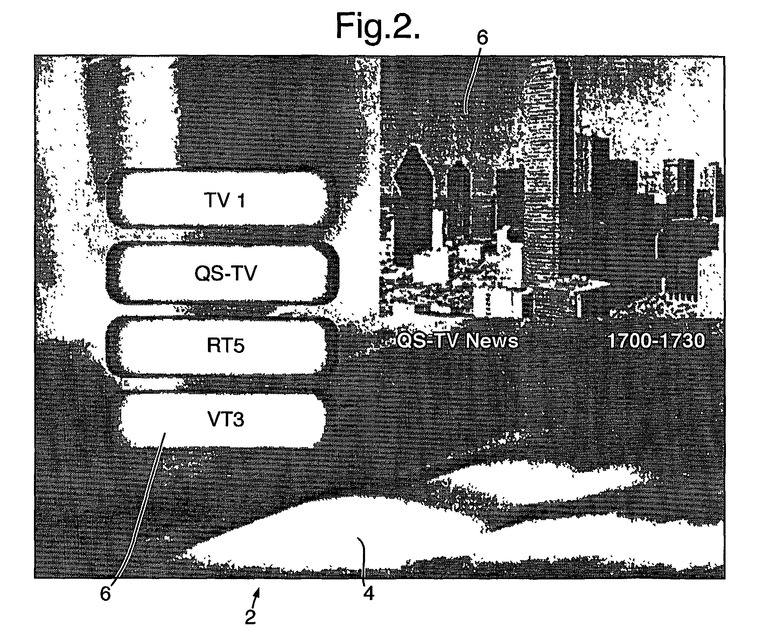

MHP compliant television devices are now capable of displaying various graphics as well as traditional television channels. The graphics may comprise simple additional information broadcast by the service provider or may be the result of some application downloaded to the television device. Figure 2 illustrates an example of a display screen 2. A background image 4 is provided on the screen 2 and additional graphics 6 are provided on top of the background 4.

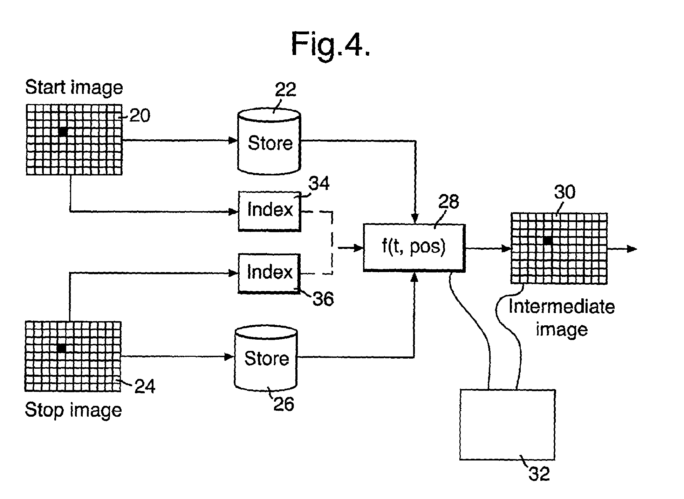

As illustrated in Figures 3(a) and 3(b), television devices include set top boxes for displaying images on television 10 or integrated television sets 12.

It is now proposed to provide a background image 4 which changes over time. In particular, it is proposed that the background image 4 should start with a start image and gradually change to an end image, preferably with the changes being imperceivable at any one time to the user.

Figure 4 illustrates schematically the preferred arrangement for achieving this.

A start image 20 is stored in a memory 22 and an end image 24 is stored in a memory 26. A processor 28 is able to retrieve data from the memories 22 and 26 so as to interpolate between the images stored in those memories and provide the interpolated data as an intermediate image to be output from a video memory 30 on a frame by frame basis so as to be displayed on the display 2. The output video memory 30 is a pixel memory storing the output image on a pixel basis. It is controlled by controller 32 so as to output its data each video frame.

The processor 28 is arranged to interpolate between corresponding blocks of the start image 22 and end image 24 as stored in the memories 22 and 26. In particular, it is capable of interpolating only one block from the start image 22 with one corresponding block from the end image 24 so as to provide a corresponding intermediate block which is used to overwrite the corresponding block of the intermediate image. Of course the block resolution should be identical for both the start and end images. Also the image should be compatible in the colour table. Thus, under the control of the controller 32, the output video memory 30 need only have one block of data replaced between each frame output. This requires considerably less processing power than providing successive new output frames.

By changing the image stored in the output video memory 30 block by block, it is possible to change gradually the background image 4 from the start image 20 to the end image 24. However, it should be appreciated that it is not the intention for a block from the start image ever to be replaced directly with a block from the end image, though ultimately an intermediate block will be replaced by its corresponding block from the end image. In fact, over a period of time, the same block of the intermediate image will be replaced a large number of times, each time with a new interpolation between its corresponding blocks in the start and end images. Furthermore, preferably, each change will be so small as to be generally imperceivable to the user.

As illustrated, indexers 34 and 36 are also provided in conjunction with the memories 22 and 26. The indexers 34 and 36 provide an index of all the blocks of the start and end images. The processor 28 makes use of these indexes in order to access individual blocks from the memories 22 and 26. In particular, the processor 28 can provide a new intermediate image block at a specific position by accessing the blocks of the same position from the memories 22 and 26. Thus, it will be seen that the processor 28 may conduct an interpolation process which is a function of both time and position. In this way, it will be appreciated that the interpolation function can be caused to change between the start and end images at different rates for different positions on the screen. For instance, the image may change faster from the centre, the side or a corner, thereby giving the impression that the change spreads from these positions even if the spreading or changing is still imperceivable to the viewer at any one time. Similarly, the position parameter may also vary in time creating other similar special effects.

As will be appreciated from the above, an important feature of the arrangement is that reduced processing power is required as compared to rewriting an entire frame image for each frame. However, it may be possible for television devices to process more than one block between successive frames. Therefore, square sub-images may be introduced at several places at the same time, for instance be 10 at a time, to create a somewhat faster changing image. In addition, instead of being introduced in a random fashion, they may be combined to larger blocks or even geometric figures such as diamonds or triangles in order to create the desired effect. Indeed, where a group of blocks are interpolated at the same time, it is not necessary that they all be interpolated in the same way. For instance, the central blocks of the group could introduce more of a change than the blocks around them. The smaller changes appearing in the outer blocks of the group will thus reduce the noticeability of the changes.

It will be appreciated that many compression schemes arbitrarily divide an image into small sections or blocks, for instance 8 x 8 pixel blocks in the case of JPEG. It is proposed to store the start and end images 22,24 compressed in this way in the memories 22 and 26. Since the imaginary grid of blocks is the same for both images, it is then possible for the processor 28 to retrieve corresponding compressed blocks of data without having to decompress the entire images, indeed, without having to decompress any more than the blocks of concern. Thus, by indexing corresponding compressed blocks, decompressing only those blocks and interpolating between them on the basis of the interpolation function, the system is able to produce the gradually changing background image with limited memory and processing power. Indeed, in compressed form, the start and end images might require typically only 130 kbytes.

The memories 22 and 26 might typically comprise the hard disk drive, RAM or flash memory on the television device.

The television device may be preloaded with the start and end images. However, the television device may make use of a demultiplexer to retrieve image data transmitted by the service provider in a transport stream. In this way, images can be downloaded from the service provider, preferably on a block by block basis. Furthermore, to reduce the time requirements in downloading this data, the system can first download the start image to be displayed as the background image 4. It may then download individual blocks or groups of blocks of the end image successively and use these to interpolate the replacement intermediate blocks.

For a system in which the received blocks of the end image are stored in a memory, once all of the blocks of the end image have been received. It is no longer necessary to go on receiving blocks. Furthermore, the received complete image can go on to be used as a start image for a further change in the background image. Alternatively, however, for a system in which the received blocks of the end image are not stored, then the memory requirements of the system may be reduced, since only the start image need be stored.

It will be appreciated that the system can be used to change the background image back and forth between two images. Similarly, three or more images may be provided between which the system changes in turn. Alternatively, the system may download a new end image each time, with the previous end image forming the new start image.

## Claims

1. A display device arranged to produce a background image which slowly changes from a start image (20) to an end image (24), the device including:
a video output memory (30) for outputting successive frames for display;
a processor for processing corresponding blocks of the start image (20) and the end image (24) with an interpolation function so as to produce respective intermediate blocks; and
a controller (32) for replacing, between the frame outputs from the video memory (30), only some of the data in the video output memory (30) with corresponding data from the intermediate blocks.

2. A device according to claim 1 further including a memory (22) in which the start image (20) is stored in a compressed form according to a predetermined compression scheme.

3. A device according to claim 1 or 2 further including a memory (26) in which the end image (24) is stored in a compressed form according to a predetermined compression scheme.

4. A device according to claim 2 or 3 wherein the compression scheme compresses the images (20,24) on a block by block basis corresponding to the blocks to be processed by the processor (28).

5. A device according to claim 1 further including a memory in which the start image (20) is stored as an array of blocks.

6. A device according to claim 4 or 5 further including an indexer (34) for recording an index of the stored blocks such that the processor (28) can retrieve blocks of specific positions according to the index.

7. A device according to claim 6 wherein the processor (28) includes a decompression for decompressing individual compressed blocks.

8. A device according to any preceding claim further including a demultiplexer for providing from a transport stream blocks of the end image.

9. A device according to claim 8 wherein the blocks from the transport stream are in compressed form.

10. A device according to any preceding claim wherein the processor (28) processes corresponding blocks as a function of time relative to the total time to move from the start image (20) to the end image (24) and as a function of the position of the corresponding blocks within the images (20,24).

11. A device according to any preceding claim wherein the processor (28) processes a plurality of corresponding blocks to form a plurality of intermediate blocks and the controller (32) replaces the data in the video output memory (30) with the corresponding data of the intermediate blocks between two successive frame outputs.

12. A device according to any preceding claim, the device being an MHP compliant television device.

13. A method of producing, in a display device, a background image which slowly changes from a start image (20) to an end image (24), the method comprising:
processing (28) corresponding blocks of the start image (20) and the end image (24) with an interpolation function so as to produce respective intermediate blocks; and
replacing between frame outputs from a video output memory of the device only some of the data in the video output memory with corresponding data from the intermediate blocks.

14. A method according to claim 13 for producing the background image in an MHP compliant television device.

15. A computer readable storage medium having recorded thereon code components that, when loaded on a computer and executed, will cause that computer to operate according to any one of claims 1 to 11 and 13.

16. A computer readable storage medium having recorded thereon code components that, when loaded on an MHP compliant television device and executed, will cause that television device to operate according to claim 12 or 14.
